# EUROPEAN PATENT APPLICATION

(11) **EP 3 263 904 A1**
(43) Date of publication of application: **03.01.2018**
(21) Application number: 16176836.1
(22) Date of filing: 29.06.2016
(51) Int. Cl.: F04D 15/00, B66C 1/02, F04D 27/02, F04D 29/66, F16F 15/00

(54) **AVOIDING CONSTRUCTIVE INTERFERENCE IN RADIAL PUMP FOR LAYER PICKER**

(71) Applicant: Qubiqa A/S, 9510 Arden (DK)
(72) Inventor: Næss-Schmidt, Steffen Erhard, 9310 Vodskov (DK); Poulsen, Michael Juhl Beider, 8920 Randers NV (DK)
(74) Representative: Chas. Hude A/S

(57) **Abstract**

The invention relates to a method and apparatus for controlling a radial pump for a layer picker operable at various work frequencies, said method comprising comparing an initial work frequency of said radial pump with at least one vibration-inducing frequency, the vibration-inducing frequency producing resonant vibrations in at least part of said pump or layer picker. Further, the method comprises changing said initial work frequency to a compensated work frequency if said initial work frequency corresponds substantially to said at least one vibration-inducing frequency, said compensated work frequency producing fewer vibrations than said initial work frequency. Thereby, constructive interference may be reduced or avoided for the pump and/or layer picker.

## Description

### FIELD OF THE INVENTION

Method for eliminating constructive interference in a radial pump for a layer picker, more specifically comparing a constructive interference profile to the work frequency of the radial pump and avoiding the constructive interference.

### BACKGROUND OF THE INVENTION

In order to provide effective and cheap distribution of goods, many goods are distributed on pallets, by way of example on so-called EU pallets (800x1200 mm). In continuation of this search for efficiency, the search extends to the packaging of the goods onto the pallets which is then for example performed by machines and robots instead of manually.

For robots to grab onto a layer of such palletised goods adequately, a suction face may be provided on lift arms whose size matches the pallet. The suction face is then extended onto a layer of goods, where the suction is activated, thus lifting the layer onto or off a pallet.

Because palletised goods have different weights and different surfaces on which to grab onto, the suction needed to lift a layer varies from product to product, meaning that pumps must operate at different intensities depending on the exact nature of the products. A product then has its own profile which allows the robot to lift it sensitively. This also means that because the work intensity of the pumps varies significantly, the pump may sometimes operate at an intensity producing constructive interference.

Furthermore, the suction interface is continuously depressurised through operation thus leading to a need for a radial pump to keep operating to maintain the suction.

Because pumps thus work continuously and at various intensities, they sometimes operate for extended periods of time at intensities producing constructive interference in the pump or lift arm thus damaging the system.

However, determining the resonant frequencies is impossible prior to installation and difficult and unwieldy even after since so many factors play a role, such as geometry, materials, wear and maintenance.

Thus, there is a desire to reduce vibrations in radial pumps for layer pickers.

### SUMMARY OF THE INVENTION

In an aspect of the invention, it concerns controlling a radial pump for a layer picker operable at various work frequencies, said method comprising comparing an initial work frequency of said radial pump (101) with at least one vibration-inducing frequency, the vibration-inducing frequency producing resonant vibrations in at least part of said pump or layer picker. Further, the method comprises changing said initial work frequency to a compensated work frequency if said initial work frequency corresponds substantially to said at least one vibration-inducing frequency, said compensated work frequency producing fewer vibrations than said initial work frequency.

By radial pump is meant any pump driven by a rotary movement, such as an impeller, a fast runner or a centrifugal pump. In an embodiment of the invention, axially driven pumps may also be used. Frequency relates to the rotations performed by the pump.

By performing the method according to the invention described above, constructive interference can be avoided or reduced for the pump thus reducing vibrations that damages the pump. Thereby, machine life can be prolonged, breakdowns can be avoided and noise from the machine is reduced thus improving working conditions. Even when the motor has to work at a higher intensity to avoid interference and retain control of the palletised goods, this increase in power and wear to the pump are often compensated by the reduced vibrations.

In an embodiment of the invention, the method further relates to preparing said layer picker for lifting a layer of goods by selecting an initial work frequency being sufficient to lift the layer of goods.

In an embodiment, changing said initial work frequency is performed prior to operating said pump at said initial work frequency. Thereby, the frequencies damaging the pump can be avoided during operation.

In an embodiment, a product profile is developed for a type of layered goods comprising a range of work frequencies usable for lifting said type of layered goods. During changing said initial work frequency, the compensated work frequency may be selected from the range of work frequencies within the product profile of said type of layered goods.

Thereby, a product type may be lifted using the same frequency without having to test it every time. Further, because a range is identified instead of only a single adequate frequency, the work frequency may be adapted based on need within this range for future use. Thereby, the controller becomes flexible in its use for even a layer picker and/or pump with changing characteristics over time due to e.g. wear.

By developing a product profile is meant that the pump is operated while the layer picker tries to lift the layer of goods. Operating it from lower frequencies, the speed is increased until an adequate grip onto the layer of goods is achieved. The speed is increased even more until an upper threshold is achieved. This may be based on convenience, the upper limit of the pump or it may be a threshold before damage of the product.

In an embodiment, an interference profile is developed, where said interference profile comprises said at least one vibration-inducing frequency, and where said interference profile is developed by operating the radial pump in at least part of a work frequency range of the radial pump; and identifying at least one work frequency corresponding to the at least one vibration-inducing frequency for this at least part of its work frequency range.

By developing is meant that the interference profile is determined based on the method according to the invention. The radial pump is turned on, preferably at either extreme of its rotational frequency and thus operating range, most preferably at the lower end. Then, assuming the radial pump is turned on, operating at its lowermost frequency, the speed is then gradually increased. While the rotational frequency is increased, the vibrations are measured and mapped to the corresponding work frequency. Vibrations are measured for at least the rotating element, being a wheel or disk-shaped element or the pump. Preferably, the vibrations are measured for the pump, the rotating element being typically a wheel or disk-shaped element, as well as for the surrounding structure, such as the lower part of the robot. When the pump has been operated in the designated operational range to be mapped, it is then turned off or otherwise readied for normal operation.

In an embodiment of the invention, the radial pump is operated in substantially its entire operational range during developing the interference profile.

In another embodiment of the invention, where it encompasses developing the interference profile, the radial pump is operated in at least 90 % of operational range, at least 80 % of operational range, at least 70 % of operational range, at least 60 % of operational range, at least 50 % of operational range, at least 40 % of operational range, at least 30 % of operational range, at least 20 % of operational range or at least 10 % of operational range.

By this method, adverse vibrations for the actual system can be avoided.

In an embodiment, the interference profile is developed anew at least once every year. In another embodiment of the invention, the interference profile may be developed at least once every eleven months, at least once every ten months, at least once every nine months, at least once every eight months, at least once every seven months, at least once every six months, at least once every five months, at least once every four months, at least once every three months, at least once every two months, at least once every month, at least once every four weeks, at least once every three weeks, at least once every two weeks, at least once each week, at least once every six days, at least once every five days, at least once every four days, at least once every three days, or at least once every two days.

In an embodiment, the interference profile is developed anew at least once every day. Thereby, the interference profile is kept up to date thus ensuring that it fits to the actual wear of the system, including the pump. Further, variations not only due to wear, but e.g. due to accidents, may be identified and compensated for.

In another embodiment of the invention, the interference profile may be developed at least once every twenty hours, at least once every eighteen hours, at least once every sixteen hours, at least once every fourteen hours, at least once every twelve hours, at least once every eleven hours, at least once every ten hours, at least once every nine hours, at least once every eight hours, at least once every seven hours, at least once every six hours, at least once every five hours, at least once every four hours, at least once every three hours, at least once every two hours, at least once every hour.

In an embodiment, the initial work frequency is a current rotational frequency of the radial pump. Thereby, current work frequency may be adapted based on current sensing. This includes accidents happening to the pump or other parts of the system.

In an embodiment, vibrations are identified continuously during use of said radial pump. Thereby, current work frequency may be adapted based on current sensing.

By continuously is meant that vibrations are sensed at least once every five minutes, at least once every four minutes, at least once every three minutes, at least once every two minutes, at least once every minute, at least once every forty-five seconds, at least once every thirty seconds, at least once every twenty seconds, at least once every fifteen seconds, at least once every ten seconds, at least once every nine seconds, at least once every eight seconds, at least once every seven seconds, at least once every six seconds, at least once every five seconds, at least once every four seconds, at least once every three seconds, at least once every two seconds, or at least once every second.

In an embodiment, reducing said vibrations comprises increasing the initial work frequency to a compensated work frequency being higher than said initial work frequency. Thereby, more power may be used to avoid vibrations.

In an embodiment, reducing said vibrations comprises decreasing the initial work frequency to a compensated work frequency being lower than said initial work frequency. Thereby, for non-minimal work frequencies, power may be saved while vibrations are reduced.

In another aspect of the invention, it relates to an apparatus for controlling a radial pump working at various intensities for a layer picker. The apparatus comprises an evaluator unit for comparing an initial work frequency of the radial pump with at least one vibration-inducing frequency, where the vibration-inducing frequency produces resonant vibrations in at least part of said pump or layer picker. Further, the apparatus comprises a controller unit for changing the initial work frequency to a compensated work frequency if said initial work frequency corresponds substantially to said at least one vibration-inducing frequency, said compensated work frequency producing fewer vibrations than said initial work frequency.

Thereby, constructive interference can be avoided or reduced for the pump thus reducing vibrations that damage the pump. Machine life can be prolonged, breakdowns can be avoided and noise from the machine is reduced thus improving working conditions. Even when the motor has to work at a higher intensity to avoid interference and retain control of the palletised goods, this increase in power and wear to the pump are often compensated by the reduced vibrations.

In an embodiment, the apparatus further comprises a vibration sensor for sensing vibrations in at least part of said pump or layer picker. Thereby, vibrations can easily be monitored without mounting a vibration sensor for every measurement. Further, vibrations may be measured according to convenience and/or need or normal use, whereby more precise control and knowledge of the pump are achievable.

In an embodiment, the apparatus further comprises a data storage for storing an interference profile (200) for the radial pump (101), where said interference profile (200) comprises a range of vibrations produced by a corresponding range of work frequencies of the radial pump, where said interference profile comprises at least one vibration-inducing frequency, and where said evaluator unit compares using said interference profile instead of at least one vibration-inducing frequency.

Thereby, the pump may be tested at various intervals to avoid operating for prolonged periods in these ranges during use. This allows operating at the frequencies most benign to the structure of the pump and layer picker and/or at the most economical frequencies. Further, this data may be stored for later use.

In an embodiment, the apparatus further comprises a data storage for storing at least one product profile for at least one type of layered goods comprising a range of work frequencies usable for lifting said type of layered goods, and where said controller unit selects said compensated work frequency from frequencies comprised in said product profile of said type of product when lifting or being about to lift said type of product.

Thereby, a product type may be lifted using the same frequency without having to test it every time. Further, because a range is identified instead of only a single adequate frequency, the work frequency may be adapted based on need within this range for future use. Thereby, the controller becomes flexible in its use for even a layer picker and/or pump with changing characteristics over time due to e.g. wear. Further, this data may be saved for future use.

### LIST OF FIGURES

In the following, example embodiments are described according to the invention, where
Fig. 1 illustrates a perspective view of a layer picker according to the invention,
Fig. 2 illustrates an interference profile and work frequency range for a radial pump according to the invention,
Fig. 3 illustrates a method for avoiding interference according to the invention.

### DETAILED DESCRIPTION OF THE INVENTION

In the following, the invention is described in detail through embodiments thereof that should not be thought of as limiting to the scope of the invention.

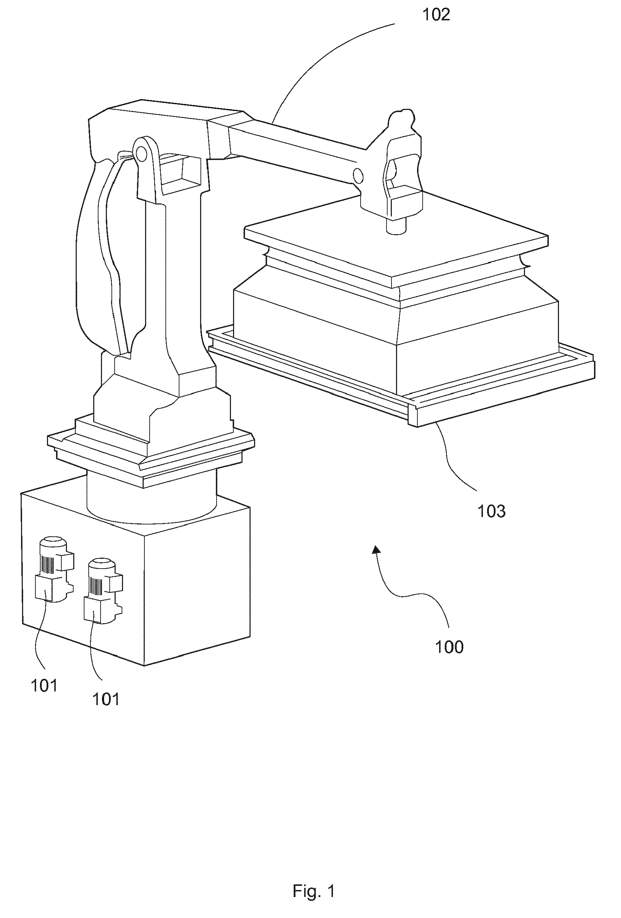

Fig. 1 illustrates a product lift system 100 according to the invention. The product lift system is a pallet layer lift arm robot adapted to lift entire layers of palletised goods at once thus automating and speeding up handling of palletised goods, while also reducing manual labour thus reducing strain of lifting cumbersome and heavy goods. The product lift system 100 works by way of a lift arm 102 comprising a suction face 103, where the suction face adheres to layers of goods from above by creating and maintaining a partial vacuum between its suction face and the product.

Furthermore, the lift arm is typically adapted to move relative to either the floor, ceiling or a wall. This may be accomplished in a variety of ways, such as being able to rotate around a central body where the robot is typically fastened to the floor. Another construction may see the suction head moving axially instead of or in addition to rotational movement, such as by lifting the lift arm by wires or chains, or moving it along girders.

A number of radial pumps 101 build and maintain the vacuum of the suction face, where they work to supply the vacuum in the suction face. Essentially, said radial pumps may be located anywhere and are conveniently located near or in the foot of the robot, or above the head when the suction face is adapted for axial movement. Alternatively, the radial pumps may be placed on the lift head or in any other location. By not mounting the radial pumps on the lift head, the vibrations originating from the pumps do substantially not transfer to the lift head. This is advantageous because the natural frequency of the lift head changes based on the cargo being lifted.

Depending on characteristics of the product, especially weight but also for example geometry, different degrees of vacuum may be needed to overcome gravity as well as to enable a useful adhering surface thus lifting the product. Because different vacuums are needed, the pumps 101 need to work at various frequencies, where frequencies are rotations performed by the pump.

Furthermore, the suction face is being depressurised continuously. This means that after a lift arm has lifted a product up, the pumps work continually at a certain work frequency to maintain the vacuum and thus keep the product under control, where the specific work intensity is determined by the product being lifted.

Thus, the radial pump may work at various intensities within its work frequency range, where rotating elements, such as a wheel or an impeller, rotate at various speeds. This rotation produces vibrations in the pump and lift system. In the pump or lift system, certain work frequencies produce substantially greater vibrations than work frequencies slightly lower and slightly higher than it. Commonly, this is caused by constructive interference in the system such as because the work frequency coincides with the natural frequencies of components of the pump, the entire pump, the motor, other components of the system or the entire lift. For example, certain types of radial pumps very useful for building the correct degree of vacuum have rotating wheels that are slimmer and with a larger radius than other types of pumps. Thereby, they are both more likely to produce vibrations, more likely to keep vibrating due to their inherently lower resonant frequencies and are also more damaged by vibrations. For these types of pumps, it is especially useful to avoid vibrations.

Furthermore, the vibrations may be caused by some event or phenomenon produced by the pump work frequency other than work frequencies coinciding with natural frequencies.

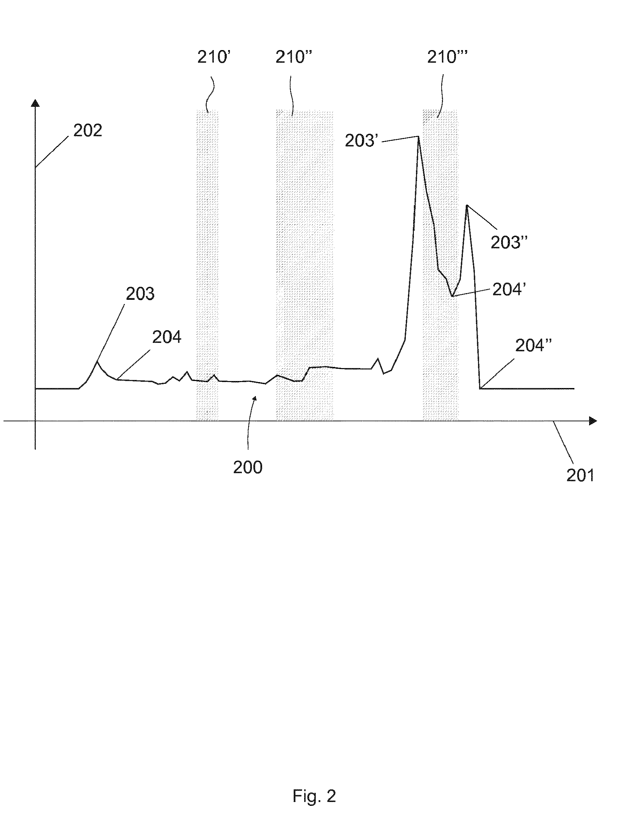

Fig. 2 illustrates an interference profile 200, where work frequency 201 of the radial pump produces vibrations 202 in the pump. Conveniently, frequency may be measured in Hertz, while vibrations may be measured as millimetres travelled. In an embodiment of the invention, the vibrations do not only pertain to vibrations produced in the pump but also to the motor, robot and subsystems of the robot, where these vibrations manifest. For example, vibrations may be produced which are not harmful to the pump but which cause resonance in other elements such as the lift arm.

The exact nature of this interference profile 200 is not a trivial matter to determine for any complicated system, even after installation, and furthermore it will change over time for example due to for example wear. Therefore, instead of analytically assessing the interference profile, sensors are placed on the pump and/or system, whereby the profile can continually or periodically be updated.

Vibration spikes 203, 203', 203" signify work frequencies producing comparatively stronger vibrations than work frequencies immediately lower and immediately higher than these spikes, such as at vibration drops 204, 204', 204". In other words, though the work frequency is higher at vibration drops 204 compared to vibration spikes 203, wear to the system is lower and so these work intensities corresponding to vibration drops 204 are often preferable over those corresponding to vibration spikes 203, despite the higher energy consumption typically associated herewith.

A product profile 210 is a range of work frequencies that allow the lift head to handle a corresponding product satisfyingly, where product profiles 210', 210" and 210'" are three example product profiles. Product profiles may comprise preferred sub-ranges, and they may cover any amount of work frequencies. In the art, the minimally sufficient work frequency allowing lifting the product is typically identified, although it is not considered advantageous to identify a range including an upper limit since higher work frequencies are associated with higher energy consumption and faster system wear due to movement of movable parts.

A product profile may be established in the following manner. First, the product is positioned under the suction face. Then, the suction face is brought into contact with the product, and the pumps are started thus creating the partial vacuum and thus activating the suction face. Alternatively, the suction may be activated prior to contact being established. By evaluating when the suction face adequately lifts the product in a controllable manner, the lower threshold is identified for applied suction. Thereupon, suction is increased to identify an upper threshold. In an embodiment, suction is increased until a satisfyingly large range is achieved. In another embodiment, suction is increased until the package has been deformed after handling. In yet another embodiment, the suction power is increased until the package breaks. At least in this latter embodiment, a safety factor may be subtracted from the final value to ensure that the product is not damaged during operation. Thereupon, a range of acceptable pump work intensities for the product have been established comprising a lower and an upper threshold.

The interference profile 200 and the product profiles 210 as illustrated are example embodiments only. Any number of product profiles 210 may exist for a given system, while the interference profile may change during the lifetime of the pump and/or system and may look very different than the one illustrated depending on the specific structure and material of the system. Further, in an embodiment of the invention, once the lift arm lifts a product, the interference profile 200 changes due to a change of forces applied to the system, and so the interference profile changes based on each new product.

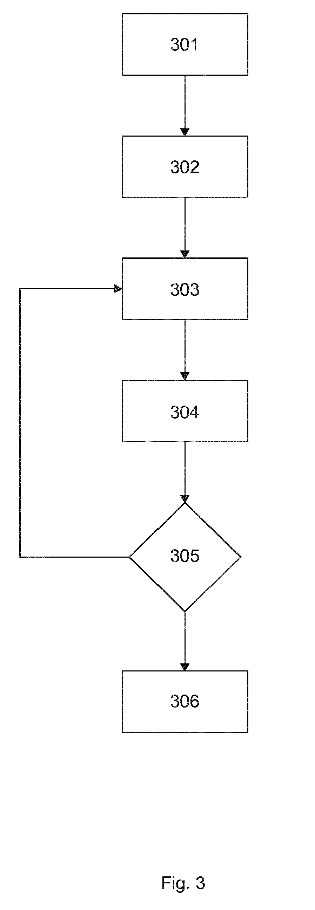

Fig. 3 illustrates an embodiment of a method according to the invention. First, the pump is turned on at operation start 301. Then, an interference profile 200 is established in interference profile determination 302, whereby a system-specific profile for the vibrations in the pump and/or system caused by the work frequency of the pump is identified.

Thereupon, a product is prepared for handling by the system. A part of this preparation is selecting the specific product profile 210 corresponding to the product to be handled. This selection of product profile 210 is performed in product profile assessment 303, whereby a range of useful suction intensities are mapped against the work frequencies needed to attain these suction intensities and thus, ranges of useful work frequencies are identified. This step may comprise evaluating the changes produced by the weight of the product onto the interference profile for the range of work intensities relevant to the given product.

Then, an actual pump work frequency is selected in pump frequency selection 304 based on the interference profile 200 and the specific product profile 210.

At a time convenient to the user, such as when the product has been fully packaged onto or off the pallet, a continue operations decision 305 is made between selecting a new product for handling or finishing operations. In case of continuing operations, the method comprises a return to product profile assessment 303. Otherwise, the method enters the step of operation end 306, where the machine and system turn off.

Turning on the system once more starts the process over again at operation start 301.

Further explanations and embodiments of the individual steps of the method according to Fig. 2 are now presented. Interference profile determination 302 is performed by either accessing a previously developed interference profile 200 or by developing one anew. Because interference profiles change over time, developing a new interference profile is preferred, at least for example once a day, once a week or once a month. In an embodiment of the invention, the interference profile is developed every time the system is turned on. Developing the interference profile comprises working at every useful frequency and sensing the corresponding vibrations, such as by starting at a lowest useful work frequency, sensing and storing the corresponding vibration, then increasing the frequency and sensing and storing the corresponding vibrations until the maximal useful work frequency has been sensed.

Product profile assessment 303 may comprise developing such new profile or accessing such previously developed profile. For example, a new product may be prepared for handling which may then comprise developing the product profile prior to this handling. This may be performed manually by trial and error at various suction powers, or it may be performed automatically, where the robot senses its control over the product and automatically develops a product profile for it. However, it may be performed, or it is then preferably stored for later use.

Pump frequency selection 304 comprises selecting a preferable exact work frequency from the viable work frequencies within the product profile assessment. In the art, the lowest of these is typically the preferable one since it uses the least amount of power. However, for some product profiles such as product profile 210"', the lowest work frequency coincides with a resonant frequency for the pump and/or system, for what reason this work frequency is not desirable. Therefore, a different work frequency, which may be any within the range delimited by the corresponding product profile, is chosen. For the example product profile 210"', a work frequency near its upper threshold at vibration drop 204' would likely be preferable since the vibrations in the pump are significantly lower than at the lowest permissible work frequencies. In an embodiment, the selection of the work frequency of the pump comprises calculations involving such parameters as cost of electricity and effect on machine life and maintenance cost, whereby optimal work frequencies can be calculated precisely and holistically based on the effect to the entire product lift system. For example, if the vibration drop is slightly lower at higher work frequencies, the normal wear and cost of electricity may make it disadvantageous to increase the work intensity further.

In an embodiment of the invention (not shown), it comprises continually sensing the vibrations in the system throughout use, whereby any sudden and unexpected increases may be identified and remedied quickly, for example by turning off the system or by changing the work frequency to another acceptable one within the product profile. For example, if an accident happens, where part of the layer drops from the lift arm, the forces applied to the system thus change which may change the interference profile and thus produce vibrations further increasing the scope of the accident. In this embodiment of the invention, where the vibrations are sensed throughout use, this increase in the scope of an accident can then be avoided.

The product layer may consist of any type and amount of goods that can be fitted into a layer for a pallet. Needed suction may not vary only with the weight of the layer but may also vary according to the depressurisation rate of the suction head, i.e. how fast the suction head loses its partial vacuum affording it the suction power. For example, the geometry of the surface, onto which the suction is applied, may affect the depressurization rate, such as by an uneven surface with fewer contact points having a large area through which it may lose its partial vacuum, or by a substantially large surface, whereby moving the layer has a correspondingly larger resistance due at least in part to air resistances or inertia. As such, a relatively light product may still require significant suction if it is packaged poorly or if it has an impractical geometry, or if it affects the depressurisation rate of the suction head by other means.

In an embodiment of the invention, the pumps may drive pressure pads being part of the lift system.

### REFERENCE NUMBERS

- 100: - product lift system
- 101: - radial pump
- 102: - lift arm
- 103: - suction face

- 200: - interference profile
- 201: - frequency / Hz
- 202: - vibrations / mm travelled
- 203, 203', 203": - vibration spike
- 204, 204', 204": - vibration drop
- 210', 210", 210"': - example product profiles

- 301: - operation start
- 302: - interference profile determination
- 303: - product profile assessment
- 304: - pump frequency selection
- 305: - continue operations decision
- 306: - operation end

## Claims

1. A method for controlling a radial pump for a layer picker operable at various work frequencies, said method comprising
- comparing an initial work frequency of said radial pump (101) with at least one vibration-inducing frequency, said vibration-inducing frequency producing resonant vibrations in at least part of said pump or layer picker; and
- changing said initial work frequency to a compensated work frequency if said initial work frequency corresponds substantially to said vibration-inducing frequency, said compensated work frequency producing fewer vibrations than said initial work frequency.

2. A method according to claim 1 further comprising the step of preparing said layer picker for lifting a layer of goods by selecting an initial work frequency being sufficient to lift the layer of goods.

3. A method according to claims 1-2, where changing said initial work frequency is performed prior to operating said pump at said initial work frequency.

4. A method according to claims 1-3, further comprising
- developing a product profile for a type of layered goods comprising a range of work frequencies usable for lifting said type of layered goods, wherein during changing said initial work frequency, the compensated work frequency may be selected from the range of work frequencies within the product profile of said type of layered goods.

5. Method according to claims 1-4 further comprising the step of developing an interference profile 200, where said interference profile comprises said at least one vibration-inducing frequency, and where said interference profile is developed by
- operating the radial pump in at least part of a work frequency range of the radial pump;
- identifying at least one vibration-inducing frequency for this at least part of said work frequency range; and
- identifying work frequencies corresponding to the at least one vibration-inducing frequency.

6. A method according to claim 5, wherein said interference profile 200 is developed anew at least once every day.

7. A method according to claim 1, wherein the initial work frequency is a current rotational frequency of the radial pump.

8. A method according to claims 1-7, wherein vibrations are identified continuously during use of said radial pump.

9. A method according to claims 1-8, wherein reducing said vibrations comprise increasing the initial work frequency to a compensated work frequency being higher than said initial work frequency.

10. A method according to claims 1-9, wherein reducing said vibrations comprise decreasing the initial work frequency to a compensated work frequency being lower than said initial work frequency.

11. An apparatus for controlling a radial pump working at various intensities for a layer picker, said apparatus comprising
- an evaluator unit for comparing an initial work frequency of said radial pump (101) with at least one vibration-inducing frequency, said vibration-inducing frequency producing resonant vibrations in at least part of said pump or layer picker; and
- a controller unit for changing said initial work frequency to a compensated work frequency if said initial work frequency corresponds substantially to said at least one vibration-inducing frequency, said compensated work frequency producing fewer vibrations than said initial work frequency.

12. An apparatus according to claim 11, further comprising
- a vibration sensor for sensing vibrations in at least part of said pump or layer picker.

13. An apparatus according to claims 11-12, further comprising
- a data storage for storing an interference profile (200) for the radial pump (101), where said interference profile (200) comprises a range of vibrations produced by a corresponding range of work frequencies of the radial pump, where said interference profile comprises at least one vibration-inducing frequency, and where said evaluator unit compares using said interference profile instead of at least one vibration-inducing frequency.

14. An apparatus according to claims 11-13, further comprising
- a data storage for storing at least one product profile for at least one type of layered goods comprising a range of work frequencies usable for lifting said type of layered goods, and where said controller unit selects said compensated work frequency from frequencies comprised in said product profile of said type of product when lifting or when being about to lift said type of product.
